# EUROPÄISCHE PATENTSCHRIFT

(11) **EP 0 539 843 B1**
(45) Veröffentlichungstag und Bekanntmachung des Hinweises auf die Patenterteilung: **15.11.1995**
(21) Anmeldenummer: 92117884.4
(22) Anmeldetag: 20.10.1992
(51) Int. Cl.: B60H 1/28

(54) **In eine Öffnung der Motorhaube eines Kraftfahrzeuges einsetzbare Lüftungseinrichtung**
Insertable ventilation device for the bonnet opening of a motor vehicle
Dispositif de ventilation insérable pour ouverture du capot d'une voiture automobile

(30) Priorität: 30.10.1991 DE 4135748
(43) Veröffentlichungstag der Anmeldung: 05.05.1993
(73) Patentinhaber: SCHADE KG, D-58815 Plettenberg (DE)
(72) Erfinder: Strunk, Harald, W-5970 Plettenberg (DE); Hoppe, Martin, Dipl.-Ing., W-5970 Plettenberg (DE)

(56) Entgegenhaltungen:
- EP-A- 0 170 110
- EP-A- 0 331 644
- DE-C- 3 936 852
- DE-U- 8 000 637
- GB-A- 2 117 694
- US-A- 3 845 983

## Beschreibung

Die vorliegende Erfindung betrifft eine in eine Öffnung einer Motorhaube eines Kraftfahrzeuges einsetzbare Lüftungsanordnung gemäß dem Oberbegriff des Anspruches 1.

Bei einer bekannten Lüftungsanordnung besteht der Außenrahmen aus Aluminium-Profilleisten, die im Preßverfahren gefertigt werden. Der Rahmen selbst wird durch Streckbiegen, Fräsen und Lackieren hergestellt. Das Lüftungsgitter ist aus einem Lochblech aus Aluminium gefertigt und mittels Nieten am Außenrahmen befestigt. Die eine Einlage bildende Dichtung wird in eine Hinterschneidung des Rahmens eingezogen. Die Dichtung ist ein extrudiertes und beschnittenes EPDM-Profil.

Die bekannte Lüftungseinrichtung verursacht hohe Fertigungskosten, da das an sich schon relativ teuere Aluiminiumprofil durch Fräsen bearbeitet und gebogen werden muß. Durch das Fräsen entsteht außerdem Abfall. Daneben ist ein relativ kostenaufwendiges Lochblech für das Lüftungsgitter erforderlich. Da die gesamte Lüftungseinrichtung außerdem lackiert werden muß, kommt es zu einer relativ hohen Ausschußquote, bedingt durch optische Fehler.
Darüber hinaus sind die als Verbindungsstege für die Luftleitlamellen sichtbaren Teile des Außenrahmens störend. Zudem verläuft die Lochanordnung des Lüftungsgitters in strömungstechnisch ungünstiger Weise nicht in Konturrichtung.

Der vorliegenden Erfindung liegt die Aufgabe zugrunde, eine in eine Öffnung eines Kraftfahrzeuges einsetzbare Lüftungseinrichtung gemäß dem Oberbegriff des Anspruches 1 so zu gestalten, daß die Fertigungskosten gegenüber der bekannten Ausführung wesentlich gesenkt werden können, und daß der ästhetische Eindruck für den Betrachter verbessert wird.

Diese Aufgabe wird durch die im Kennzeichen des Anspruches 1 aufgeführten Merkmale gelöst. Da nunmehr der Rahmen und das Lüftungsgitter ein einstückiges Formteil bilden, entfallen die bisher notwendigen aufwendigen Leichtmetallprofile, die zusätzlich spangebend bearbeitet und gebogen werden mußten. Das Formteil läßt sich ohne Schwierigkeiten im Spritzgußverfahren herstellen. Die an dem Formteil angeordneten Aufnahmetaschen für die Haltestege der Luftleitlamellen ermöglichen eine einfache Montage, ohne daß es bei entsprechender Auslegung zu Klappergeräuschen kommt, da je nach Gestaltung der Aufnahmetaschen und der Haltestege eine kraftschlüssige und/oder formschlüssige Verbindung erreicht wird.

Die Fertigungskosten werden noch weiter gesenkt, wenn aus dem Rahmen, dem Lüftungsgitter und den Aufnahmetaschen das einstückige Formteil gebildet wird, weil dann die Anbringung der Aufnahmetaschen entfällt.

Fertigungstechnisch ist es besonders günstig, wenn das einstückige Formteil ein im Spritzgußverfahren hergestelltes Kunststoff-Formteil ist, da Kunststoffe verhältnismäßig preiswert und gut zu verarbeiten sind. Die Luftleitlamellen können dann zweckmäßig aus stranggepreßten Aluminiumprofilleisten gefertigt werden, die von einer Stange abgelängt und ggf. entsprechend einer vorgegebenen Kontur gebogen werden. Bei der Festlegung der Luftleitlamellen können die form- und materialfedernden Eigenschaften von Kunststoffen ausgenutzt werden. Die Aufnahmetaschen für die Haltestege der Luftleitlamellen sind vorteilhaft im Querschnitt U-förmig ausgebildet, so daß die Haltestege der Luftleitlamellen in die durch die parallelen Schenkel begrenzten Schlitze eingesteckt werden können. Die Luftleitlamellen können besonders sicher festgelegt werden, wenn die Haltestege der Luftleitlamellen nicht geradlinig ausgebildet, sondern, bezogen auf die Höhe, gekröpft sind. Der gleiche Effekt wird erreicht, wenn sie in Längsrichtung gesehen zick-zackförmig oder wellenförmig ausgebildet sind. Diese als Profilierung zu sehende Gestaltung der Haltestege bewirkt, daß die Innenflächen der Aufnahmetaschen partiell unterschiedlich stark verformt werden, wodurch die Rückstellkräfte in diesen Bereichen so groß werden, daß auch bei extrem hohen Geschwindigkeiten die notwendige Sicherheit gegen Herausziehen der Luftleitlamellen gegeben ist. Vorteilhaft ist vorgesehen, daß die Luftleitlamellen durch Sicherungsschrauben zussätzlich gesichert werden, die quer zur Längsrichtung der Haltestege der Luftleitlamellen verlaufen und im Übergangsbereich zwischen den Haltestegen und den angrenzenden Bereichen der Aufnahmetaschen angeordnet sind.

Aus fertigungstechnischen Gründen kann es zweckmäßig sein, wenn die Haltestege der Luftleitlamellen nicht direkt in die Aufnahmetaschen des Formteils gesteckt sind, sondern in im Querschnitt U-förmig ausgebildete und in den Aufnahmetaschen angeordnete Einstecktaschen.

Anhand der Zeichnungen wird die Erfindung nachstehend näher erläutert.

Es zeigen:
- Figur 1:: eine erfindungsgemäße Lüftungsanordnung im Aufriß,
- Figur 2:: die Lüftungsanordnung nach Figur 1 im Querschnitt gemäß einer ersten Ausführungsart,
- Figur 3:: eine Einzelheit III aus der Figur 1 in vergrößerter Darstellung in einer Unteransicht,
- Figur 4:: die Lüftungsanordnung nach Figur 1 im Querschnitt gemäß einer zweiten Ausführungsform,
- Figur 5:: eine Teil-Ansicht in Richtung des Pfeiles Y in Figur 4,
- Figur 6:: die Lüftungsanordnung gemäß Figur 2 in vergrößerter Darstellung,
- Figur 7:: die Lüftungsanordnung nach der Figur 6 im Querschnitt,
- Figur 8:: eine Ansicht in Pfeilrichtung Y der Ausführung nach Figur 4 und
- Figur 9:: die Ausführung nach der Figur 8 im vergrößerten Querschnitt.

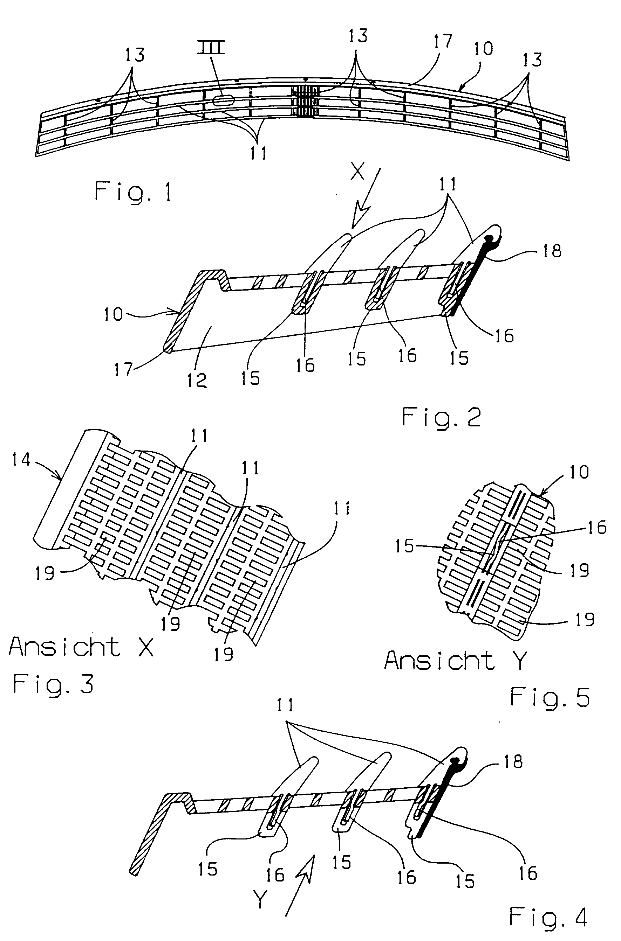

Die in der Figur 1 schematisch dargestellte Lüftungsanordnung besteht aus einem Formteil 10, das in der Projektion gesehen als bogenförmiges Segment ausgebildet ist. Das Formteil 10 besteht im wesentlichen aus drei im gleichen Abstand zueinander angeordneten Luftleitlamellen 11, einem Rahmen 12, der eine Vielzahl von quer zu den Luftleitlamellen 11 verlaufenden Verbindungsstegen 13 beinhaltet und einem anhand der Figur 3 näher erläuterten Lüftungsgitter 14. An das Formteil 10 sind an der unteren, den Luftleitlamellen 11 abgewandten Seite drei Aufnahmetaschen 15 angeformt, die im Querschnitt U-förmig ausgebildet sind und in die jeweils ein Haltesteg 16 einer Luftleitlamelle 11 eingesteckt ist. Der Rahmen 12 des Formteiles 10 ist an einem querverlaufenden Rand mit einem zur abgewandten Richtung der Luftleitlamellen 11 zeigenden Befestigungsflansch 17 versehen, der im eingebauten Zustand der Lüftungsanordnung bei Vorwärtsfahrt des Fahrzeugs vorn liegt. Am gegenüberliegenden, querverlaufenden Rand ist eine Profildichtung 18 in eine Nut der zugeordneten Luftleitlamelle 11 eingeclipst.

Die Schnittdarstellung nach der Figur 2 zeigt, daß die Aufnahmetaschen 15 und der Befestigungsflansch 17 zur Ebene des Lüftungsgitters 14 derart geneigt stehen, daß auch die Luftleitlamellen 11 bei Vorwärtsfahrt des Fahrzeuges strömungstechnisch günstig schräg verlaufen, wobei die oberen freien Ränder in Richtung zur Profildichtung 18 verspringen. Die Figur 2 zeigt ferner, daß jede Luftleitlamelle 11 einen Haltesteg 16 aufweist, der in die zugeordnete Aufnahmetasche 15 eingesteckt ist.

Die Figur 3 zeigt eine Einzelheit III nach der Figur 1 in einer Ansicht von unten, d.h. von der Seite der Aufnahmetaschen 15 aus. Danach ist das Lüftungsgitter 14 mit einer Vielzahl von rechteckförmigen Öffnungen 19 versehen, deren Querschnitte verhältnismäßig klein sind. Zwischen zwei Aufnahmetaschen 15 liegen zwei Reihen von Öffnungen 19. Die kürzeren Kanten der rechteckigen Öffnungen verlaufen parallel zu den Aufnahmetaschen 15 bzw. den Luftleitlamellen 11.

Die erfindungsgemäße Lüftungsanordnung kann in jede beliebige dafür vorgesehene Öffnung eines Kraftfahrzeuges eingesetzt werden, z.B. in die Motorhaube, selbstverständlich aber auch anderen Stellen, an denen eine Be- und Entlüftung gefordert wird.

Die Figuren 4 und 5 zeigen, daß die Haltestege 16 der Luftleitlamellen 11 nicht geradlinig verlaufen, sondern, bezogen auf den Querschnitt, gekröpft sind, d.h. der untere Bereich verspringt gegenüber dem oberen Bereich, wodurch die Haltekräfte besonders groß werden. Die Figur 5 zeigt, daß sich die Aufnahmetaschen 15 nicht über die gesamte Breite des Formteils 10 erstrecken, sondern daß jede Aufnahmetasche 15 aus mehreren Einzeltaschen gebildet ist, deren Breite gegenüber der Breite des Lüftungsgitters 14 relativ gering ist. Außerdem zeigt die Figur 5, daß die Haltestege 16 in Längsrichtung nicht geradlinig verlaufen, sondern zick-zackförmig oder wellenförmig.

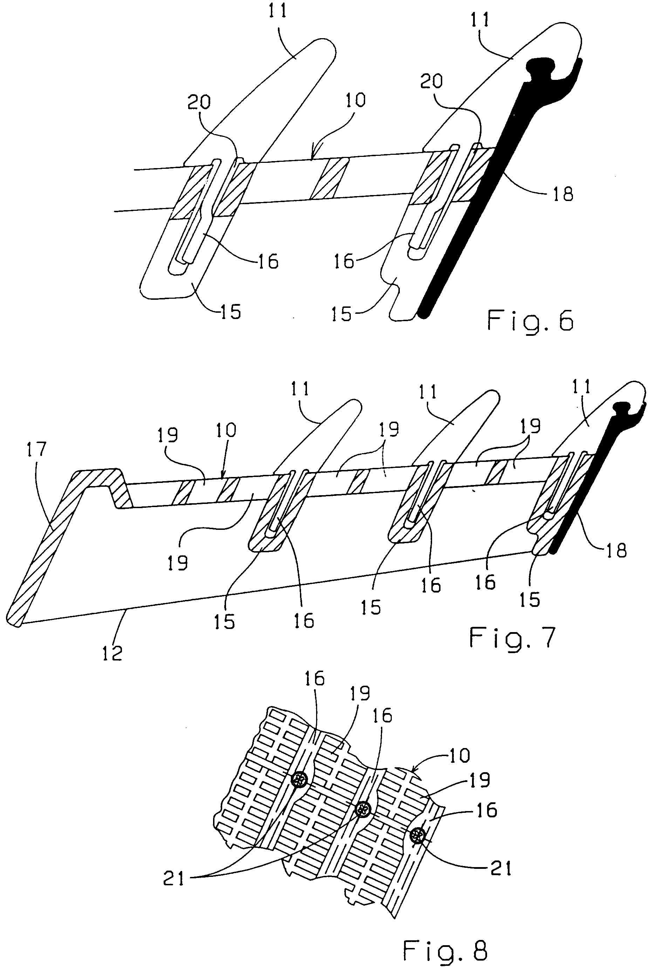

Bei den Ausführungen in den Figuren 6 und 7 ist in jeder Aufnahmetasche 15 eine im Querschnitt U-förmige Einstecktasche 20 eingesetzt, in die dann der Haltesteg 16 der jeweiligen Luftleitlamelle eingesteckt ist. Bei der Ausführung nach der Figur 6 sind die Haltestege 16 der Luftleitlamellen gekröpft, bei der Ausführung nach der Figur 7 dagegen geradlinig ausgebildet.

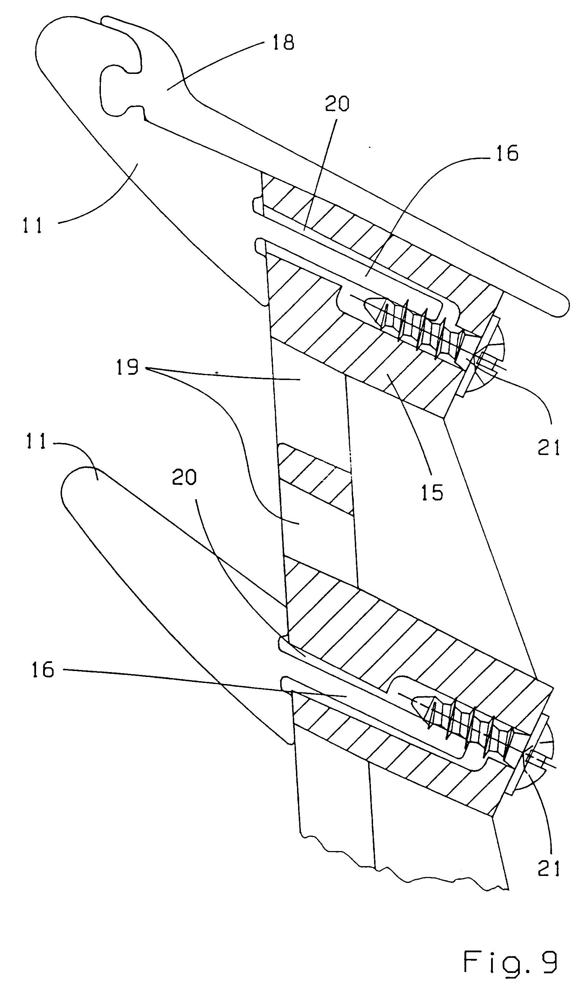

Bei den Beispielen nach den Figuren 8 und 9 sind die Luftleitlamellen durch zusätzliche Sicherungsschrauben 21 gesichert. Die Sicherungsschrauben 21 sind Schneidschrauben, deren Gewindegänge sich beim Eindrehen in eine Bohrung in die Materialteile einschneiden. Die Sicherungsschrauben 21 stehen quer zur Ebene des Lüftungsgitters 14 und erfassen die Aufnahmetaschen 15 und die Haltestege 16 und, sofern vorhanden, auch die Einstecktaschen 20. Diese Ausführung bietet die größtmögliche Sicherheit gegen Herausziehen oder Herausschleudern der Luftleitlamellen.

Das Formteil 10 wird zweckmäßig aus Kunststoff im Spritzgußverfahren hergestellt. Die Luftleitlamellen 11 bestehen aus einem Leichmetall, vorzugsweise aus Aluminium. Sie werden von Stangen abgeschnitten, welche im Strangpreßverfahren hergesstellt werden. Nach dem Ablängen werden sie entsprechend gebogen.

## Patentansprüche

1. In eine Öffnung eines Kraftfahrzeuges, einsetzbare Lüftungsanordnung, die im wesentlichen aus einem Rahmen (12), einem Lüftungsgitter (14), sich im wesentlichen über die Breite der Lüftungsanordnung gegenüber der Ebene des Lüftungsgitters (14) nach oben erstreckenden Luftleitlamellen (11), sowie ggf. einer an einer Seite des Rahmens (12) vorgesehenen Dichtung (18) gebildet ist, dadurch gekennzeichnet, das zumindest der Rahmen (12) und das Lüftungsgitter (14) als einstückiges Formteil (10) ausgebildet sind, daß an der unteren Seite des Formteils (10) Aufnahmetaschen (15) angeordnet sind, in die jeweils ein Haltesteg (16) der Luftleitlamelle (11) kraft- und/oder formschlüssig durch Einstecken festgelegt ist.

2. Lüftungsanordnung nach Anspruch 1, dadurch gekennzeichnet, daß das Formteil (10) aus dem Rahmen (12), dem Lüftungsgitter (14) und den Aufnahmetaschen (15) gebildet ist.

3. Lüftungsanordnung nach Anspruch 1 oder 2, dadurch gekennzeichnet, daß das Formteil (10) ein im Spritzgußverfahren gefertigtes Kunststoff-Teil ist.

4. Lüftungsanordnung nach Anspruch 1, dadurch gekennzeichnet, daß die Luftleitlamellen (11) im Strangpressverfahren hergestellte Leichtmetallprofilleisten sind.

5. Lüftungsanordnung nach Anspruch 1, dadurch gekennzeichnet, daß die Aufnahmetaschen (15) zur Festlegung der Luftleitlamellen (11) im Querschnitt U-förmig ausgebildet sind.

6. Lüftungsanordnung nach Anspruch 1, dadurch gekennzeichnet, daß die Haltestege (16) der Luftleitlamellen (11), bezogen auf die Höhe, gekröpft und/oder in Längsrichtung zick-zackförmig, wellenförmig oder dergleichen ausgebildet sind.

7. Lüftungsanordnung nach Anspruch 1, dadurch gekennzeichnet, daß die Luftleitlamellen (11) durch Sicherungsschrauben (21) zusätzlich gesichert sind.

8. Lüftungsanordnung nach Anspruch 1, dadurch gekennzeichnet, daß in die Aufnahmetaschen (15) des Formteils (10) Einstecktaschen (20) eingesteckt sind, die die Haltestege (16) der Luftleitlamellen (11) aufnehmen.

9. Lüftungsanordnung nach einem oder mehreren der vorhergehenden Ansprüche, dadurch gekennzeichnet, daß die Aufnahmetaschen (15) aus gegenüber der Breite des Lüftumgsgitters kurzen Einzeltaschen gebildet sind.

10. Lüftungsanordnung nach einem oder mehreren der vorhergehenden Ansprüche, dadurch gekennzeichnet, daß der Rahmen (12) aus Verbindungsstegen (13) und einem winkelig zum Lüftungsgitter (14) stehenden Befestigungsflansch (17) gebildet ist.

## Claims

1. Ventilation arrangement which can be introduced into an opening of a motor vehicle and is formed essentially from a frame (12), from a ventilation grille (14), from air-directing lamellae (11) which extend upwards, essentially over the width of the ventilation arrangement, with respect to the plane of the ventilation grille (14), and, if appropriate, from a seal (18) provided on one side of the frame (12), characterized in that at least the frame (12) and ventilation grille (14) are designed as a single-piece moulding (10), and that there are arranged, on the lower side of the moulding (10), receiving pockets (15), into which in each case one retaining web (16) of the air-directing lamellae (11) is fixed in a frictionally and/or positively locking manner by plugging-in.

2. Ventilation arrangement according to Claim 1, characterized in that the moulding (10) is formed from the frame (12), the ventilation grille (14) and the receiving pockets (15).

3. Ventilation arrangement according to Claim 1 or 2, characterized in that the moulding (10) is a plastic part fabricated by injection moulding.

4. Ventilation arrangement according to Claim 1, characterized in that the air-directing lamellae (11) are light-metal profile strips produced by extrusion.

5. Ventilation arrangement according to Claim 1, characterized in that the receiving pockets (15) for fixing the air-directing lamellae (11) are designed with a U-shaped cross-section.

6. Ventilation arrangement according to Claim 1, characterized in that the retaining webs (16) of the air-directing lamellae (11) are designed in a bent-off manner, as regards the height, and/or to be zigzag-shaped, wave-shaped or the like in the longitudinal direction.

7. Ventilation arrangement according to Claim 1, characterized in that the air-directing lamellae (11) are additionally secured by securing screws (21).

8. Ventilation arrangement according to Claim 1, characterized in that plugged into the receiving pockets (15) of the moulding (10) are plug-in pockets (20) which receive the retaining webs (16) of the air-directing lamellae (11).

9. Ventilation arrangement according to one or more of the preceding claims, characterized in that the receiving pockets (15) are formed from individual pockets which are short with respect to the width of the ventilation grille.

10. Ventilation arrangement according to one or more of the preceding claims, characterized in that the frame (12) is formed from connecting webs (13) and a fastening flange (17) which is at an angle with respect to the ventilation grille (14).

## Revendications

1. Agencement d'aération, susceptible d'être mis en place dans une ouverture d'un véhicule automobile, essentiellement constitué d'un cadre (12), d'une grille d'aération (14), de lamelles de guidage d'air (11) qui s'étendent vers le haut sensiblement sur la largeur de l'agencement d'aération par rapport au plan de la grille d'aération (14), ainsi que d'un joint prévu le cas échéant sur un côté du cadre (12), caractérisé en ce que le cadre (12) et la grille d'aération (14) au moins sont réalisés sous la forme d'une pièce préformée (10) d'une seule pièce, en ce que les poches de réception (15) sont agencées à la face inférieure de la pièce préformée 10, dans lesquelles sont fixées par enfichage à coopération de force et/ou de forme des barrettes de maintien respectives (16) des lamelles de guidage d'air (11).

2. Agencement d'aération selon la revendication 1, caractérisé en ce que la pièce préformée (10) est formée par le cadre (12), la grille d'aération (14) et les poches de réception (15).

3. Agencement d'aération selon l'une ou l'autre des revendications 1 et 2, caractérisé en ce que la pièce préformée (10) est une pièce en matière plastique réalisée suivant un procédé de moulage par injection.

4. Agencement d'aération selon la revendication 1, caractérisé en ce que les lamelles de guidage d'air (11) sont des barrettes profilées en métal léger produites par extrusion.

5. Agencement d'aération selon la revendication 1, caractérisé en ce que les poches de réception (15) sont réalisées en forme de U en section transversale pour la fixation des lamelles de guidage d'air (11).

6. Agencement d'aération selon la revendication 1, caractérisé en ce que les barrettes de maintien (16) des lamelles de guidage d'air (11) sont, en se rapportant à leur hauteur, coudées et/ou réalisées en forme de zigzag, en forme ondulée, ou similaire, en direction longitudinale.

7. Agencement d'aération selon la revendication 1, caractérisé en ce que les lamelles de guidage d'air (11) sont en outre fixées par des vis de sécurité (21).

8. Agencement d'aération selon la revendication 1, caractérisé en ce que les poches d'enfichage (20) sont enfichées dans les poches de réception (15) de la pièce (10), ces poches d'enfichage recevant les barrettes de maintien (16) des lamelles de guidage d'air (11).

9. Agencement d'aération selon l'une ou plusieurs des revendications précédentes, caractérisé en ce que les poches de réception (15) sont formées par des poches individuelles courtes par rapport à la largeur de la grille d'aération.

10. Agencement d'aération selon l'une ou plusieurs des revendications précédentes, caractérisé en ce que le cadre (12) est formé de barrettes de liaison (13) et d'une bride de fixation (17) qui s'étend sous un angle par rapport à la grille d'aération (14).
